# EUROPÄISCHE PATENTSCHRIFT

(11) **EP 3 608 163 B1**
(45) Veröffentlichungstag und Bekanntmachung des Hinweises auf die Patenterteilung: **18.08.2021**
(21) Anmeldenummer: 19185430.6
(22) Anmeldetag: 10.07.2019
(51) Int. Cl.: B60N 2/02, B60N 2/50

(54) **FAHRZEUGSITZ MIT BEDIENEINRICHTUNG**
VEHICLE SEAT WITH CONTROL DEVICE
SIÈGE DE VÉHICULE POURVU DE DISPOSITIF DE COMMANDE

(30) Priorität: 13.07.2018 DE 102018117000
(43) Veröffentlichungstag der Anmeldung: 12.02.2020
(73) Patentinhaber: GRAMMER AG, 92289 Ursensollen (DE)
(72) Erfinder: Frohriep, Susanne, 92224 Amberg (DE); Coppejans, Laurent, 3090 Overijse (BE)
(74) Vertreter: Hannke, Christian

(56) Entgegenhaltungen:
- EP-A1- 1 659 020
- DE-A1- 10 341 162
- DE-A1- 19 952 560
- GB-A- 2 535 535
- US-A1- 2016 355 111

## Beschreibung

Die Erfindung betrifft eine Bedieneinrichtung zur Einstellung von Sitzparametern eines Sitzes, insbesondere eines Fahrzeugsitzes. Ferner betrifft die Erfindung einen Sitz insbesondere Fahrzeugsitz, mit einer Bedieneinrichtung zur Einstellung von Sitzparametern.

In Kraftfahrzeugen, insbesondere in Nutzfahrzeugen wie Traktoren oder LKW, ist es aufgrund der unter Umständen langen Fahrtzeiten wichtig, dem Fahrer einen höchstmöglichen Sitzkomfort zu bieten. Um dies zu ermöglichen, können die Fahrer eine Vielzahl von Sitzparametern ihren Bedürfnissen entsprechend einstellen. Derartige Sitzparameter können beispielsweise die Sitzhöhe, die Sitzposition in Längsrichtung (X), die Position und Ausrichtung von einzelnen Komponenten des Sitzes wie Rückenlehne, Kopfteil, Sitzkissenteil oder aber auch Einstellung einer Feder- und/oder Dämpfeinrichtung sein. Ferner können entsprechende Sitzparameter eine Sitzkomforteinrichtung betreffen, beispielsweise eine Sitzklimatisierungseinrichtung, eine Sitzkontureinstellungseinrichtung oder eine Massageeinrichtung.

Üblicherweise ist zur Einstellung jedes Sitzparameters ein entsprechendes Stellteil, wie beispielsweise ein Schalter oder ein Taster vorgesehen. Dieses hat zur Folge, dass eine Vielzahl von solchen Stellteilen notwendig ist, wodurch zum einen die Bedienung für den Fahrer unübersichtlich wird und zum anderen großer Bauraum in Anspruch genommen wird. DE 199 52 560 A1 zeigt eine Bedieneinrichtung zur Einstellung von Sitzparametern eines Sitzes, insbesondere eines Fahrzeugsitzes, wobei die Bedieneinrichtung zumindest ein Multifunktionsbedienelement umfasst, welches in zumindest fünf Schaltrichtungen bewegbar ist, wobei jede Schaltrichtung einer bestimmten Funktion zuordenbar ist, welche einen Sitzparameter ändert.

Aufgabe der Erfindung ist es demnach, die Bedienung einer Vielzahl von Sitzparametern in einer Art und Weise zu ermöglichen, welche sowohl übersichtlich für die Bediener ist als auch Bauraum spart.

Diese Aufgabe wird gelöst von einer Bedieneinrichtung mit den Merkmalen des Anspruchs 1.

Im Folgenden wird die Bedieneinrichtung im Zusammenhang mit einem Sitz beschrieben. Dies soll nicht als Einschränkung gedacht sein. Weitere Anwendungen zur Einstellung verschiedenster Parameter wären durchaus ebenso denkbar.

Vorzugsweise ist das Multifunktionsbedienelement mit einem Sitz derart verbunden, dass eine erfindungsgemäße Bewegung ermöglicht ist. Dadurch, dass durch das Multifunktionsbedienelement mehrere Funktionen bedient werden können, kann auf eine Vielzahl individueller Schalter und Taster verzichtet werden. Es wird somit erheblich Bauraum gespart. Die Herstellungskosten reduzieren sich ebenso, da weniger Bauteile verbaut werden müssen. Schließlich wird dem Nutzer eine übersichtliche Bedienung präsentiert, da nicht mehr nach dem jeweils relevanten Schalter beziehungsweise Taster gesucht werden muss, sondern unterschiedliche Sitzparameter mit dem Multifunktionsbedienelement angesteuert werden. Unter "Sitzparameter" sind alle Einstellungen eines Sitzes oder Einrichtungen, welche mit dem Sitz assoziiert sind zu verstehen. Es können jedoch auch Einstellungen von weiteren Einrichtungen des Fahrzeugs unter einem solchen Sitzparameter verstanden werden.

Erfindungsgemäß umfasst die Bedieneinrichtung zumindest ein Auswahlelement, mittels welchem zumindest zwei Bedienebenen auswählbar sind. Vorzugsweise gehören die den Schaltrichtungen zugeordneten Funktionen einer ausgewählten Bedienebene an. Durch das Auswahlelement kann eine bestimmte Bedienebene ausgewählt werden, welche eine Funktionengruppe, beispielsweise die Einstellung der Sitzparameter für eine bestimmte Komponente oder mehrere Komponenten des Sitzes umfasst. Dadurch, dass durch das Multifunktionsbedienelement mehrere Bedienebenen, welche mehrere Funktionen beinhalten können, bedient werden können, kann auf eine Vielzahl individueller Schalter und Taster verzichtet werden. Es wird somit erheblich Bauraum gespart. Die Herstellungskosten reduzieren sich ebenso, da weniger Bauteile verbaut werden müssen. Schließlich wird den Nutzern eine übersichtliche Bedienung präsentiert, da nicht mehr nach dem jeweils relevanten Schalter beziehungsweise Taster gesucht werden muss.

Nach einer bevorzugten Ausführungsform umfasst die Bedieneinrichtung ein einziges Multifunktionsbedienelement. Mittels diesem einzigen Multifunktionsbedienelement ist eine Vielzahl von Sitzparametern einstellbar.

Nach einer weiteren bevorzugten Ausführungsform umfasst die Bedieneinrichtung zwei oder mehrere Multifunktionsbedienelemente. Diese Multifunktionselemente können die gleichen Bedienebenen mit den dazugehörigen Funktionen zur Auswahl haben. Den Nutzern wird somit die Möglichkeit gegeben, an unterschiedlich zugänglichen Stellen des Sitzes greifen zu können, um die entsprechenden Sitzparameter zu ändern. Dies Sitzparameter können somit in unterschiedlichen Fahrsituationen entsprechend bequem geändert werden.

Es wäre aber auch denkbar, dass die unterschiedlichen Multifunktionsbedienelemente unterschiedliche Bedienebenen aufweisen, wodurch eine Aufteilung der Bedienebenen in ähnliche Änderungen der Sitzparameter möglich ist. Dies kann von Vorteil sein, wenn eine große Anzahl von Bedienebenen vorhanden ist.

Im Folgenden wird sich nur auf ein Multifunktionsbedienelement bezogen. Selbstverständlich können jedoch im Falle, dass die Bedieneinrichtung zwei oder mehrere Multifunktionsbedienelemente aufweist, die weiteren Multifunktionsbedienelemente die entsprechenden Merkmale aufweisen.

Nach einer besonders bevorzugten Ausführungsform ist das Multifunktionsbedienelement in sechs Schaltrichtungen bewegbar. Vorzugsweise weist das Multifunktionsbedienelement drei Bewegungsachsen auf. Bevorzugt sind jeweils zwei entgegengesetzte Schaltrichtungen entlang einer Bewegungsachse (X, Y, Z) orientiert.

Vorzugsweise entsprechen eine erste und eine zweite Schaltrichtung einer translatorischen Bewegung des Multifunktionsbedienelements entlang einer ersten Bewegungsachse (X) in entgegengesetzten Richtungen. Das Multifunktionsbedienelement kann somit durch Ziehen oder Schieben entlang der ersten beziehungsweise zweiten Schaltrichtung bewegt werden. Vorzugsweise verläuft die erste Bewegungsachse (X) entlang der horizontalen Längsrichtung (X1) des Sitzes. Eine Verlagerung des Sitzes entlang dieser Längsrichtung (X1) entspricht somit der Änderung des Abstands des Sitzes zu den Bedienelementen des Fahrzeugs in Längsrichtung.

Nach einer weiteren bevorzugten Ausführungsform entsprechen eine dritte und eine vierte Schaltrichtung einer translatorischen Bewegung des Multifunktionsbedienelements entlang einer zweiten Bewegungsachse (Z) in jeweils entgegengesetzten Richtungen. Alternativ entsprechen die dritte und die vierte Schaltrichtung einer Drehbewegung des Multifunktionsbedienelements um die erste Bewegungsachse (X) in entgegengesetzten Richtungen. Vorzugsweise verläuft die zweite Bewegungsachse (Z) entlang der Höhenrichtung (Z1) des Sitzes und ist senkrecht zu der ersten Bewegungsachse (X). Sowohl eine translatorische Bewegung des Multifunktionsbedienelements entlang der zweiten Bewegungsachse (Y) als auch eine Drehbewegung des Multifunktionsbedienelements um die erste Bewegungsachse (X) bedeutet für die sich im Sitz befindliche Person eine Bewegung des Multifunktionsbedienelements nach oben oder unten. Vorzugsweise ist der Drehpunkt dabei nahe am Sitz, um eine leichte Drehbewegung des Multifunktionsbedienelements zu ermöglichen.

Nach einer weiteren bevorzugten Ausführungsform entsprechen eine fünfte und eine sechste Schaltrichtung einer Drehbewegung des Multifunktionsbedienelements um die dritte Bewegungsachse (Y) in jeweils entgegengesetzte Richtungen. Vorzugsweise verläuft die dritte Bewegungsachse (Y) entlang der Breitenrichtung (Y1) des Sitzes und ist senkrecht zu der ersten Bewegungsachse (X) und der zweiten Bewegungsachse (Z). Der Drehpunkt kann dabei mittig, außermittig des Multifunktionsbedienelements angeordnet sein. Alternativ könnte der Drehpunkt an einem vorderen oder einem hinteren Ende des Multifunktionsbedienelements angeordnet sein. Entsprechend der Anordnung des Drehpunkts ergeben sich unterschiedliche Neigungsarten des Multifunktionsbedienelements.

Nach einer weiteren bevorzugten Ausführungsform umfasst das Multifunktionsbedienelement eine Rückstelleinheit, so dass das Multifunktionsbedienelement nach einer Auslenkung entlang einer bestimmten Schaltrichtung nach einer vorbestimmten Zeit mittels der Rückstelleinheit in seine Ausgangsstellung verlagerbar ist. Eine solche Rückstelleinheit könnte ein Federelement, ein elastisches Element oder ein Aktuator, der elektrisch pneumatisch oder hydraulisch betrieben ist, sein.

Erfindungsgemäß ist das Multifunktionsbedienelement tafelförmig ausgestaltet. Das Multifunktionselement kann somit Abmessungen vergleichbar mit üblichen Smartphones aufweisen. Vorzugsweise weist das Multifunktionselement eine Länge in einem Bereich von 5 cm bis 15 cm, eine Breite in einem Bereich von 3 cm bis 10 cm und eine Höhe in einem Bereich von 0,5 cm bis 3 cm auf. Eine derartige Ausgestaltung bietet zum einen eine optimale Grifffläche für den Nutzer und zum anderen nimmt das Multifunktionselement nicht übermäßig viel Bauraum ein.

Nach einer weiteren bevorzugten Ausführungsform ist das Multifunktionselement mit haptischen Elementen und/oder einem Grip-Belag ausgestattet. Ein solcher Grip-Belag kann beispielsweise ein gummierter Belag oder ein Belag mit einer aufgerauten Oberfläche sein. Dadurch wird ein sicherer und angenehmer Griff des Multifunktionselements gewährleistet.

Erfindungsgemäß ist das Auswahlelement auf einer Oberfläche des Multifunktionsbedienelements angeordnet. Bevorzugt auf einer Oberfläche, welche durch die Länge und die Breite des Multifunktionsbedienelements begrenzt wird. Eine Anordnung an einer seitlichen Oberfläche, also eine Oberfläche, welche durch die Höhe und die Breite des Multifunktionsbedienelements begrenzt wird oder eine Oberfläche, welche durch die Höhe und die Länge des Multifunktionsbedienelements begrenzt wird, ist ebenso denkbar.

Vorzugsweise ist das Auswahlelement als Schalter, als Taster oder als Array von Schaltern oder Tastern ausgestaltet. Alternativ oder kumulativ kann das Auswahlelement als Joystick, als Kugelschalter oder als mehrstufiger Taster ausgestaltet sein. Nach einer weiteren bevorzugten Ausführungsform ist das Auswahlelement als Berührbildschirm ausgestaltet.

Nach einer weiteren bevorzugten Ausführungsform ist das Multifunktionsbedienelement mit zumindest einem Identifikationselement versehen, mittels welchem die Schaltrichtungen identifizierbar sind. Derartige Identifikationselemente können beispielsweise Mulden am vorderen und hinteren Ende des Multifunktionsbedienelements sein, welche zur Identifikation der ersten und zweiten Schaltrichtungen (ziehen/schieben) dienen können.

Ferner können Mulden auf der Ober- und Unterseite des Multifunktionsbedienelements vorgesehen sein, welche zur Identifikation der dritten und vierten Schaltrichtungen (nach oben ziehen/nach unten drücken) dienen können. Die Ober- und Unterseite sind die sich gegenüberliegenden Oberflächen, welche durch die Länge und die Breite des Multifunktionsbedienelements begrenzt sind.

Zur Identifikation der fünften und der sechsten Schaltrichtung können ebenso anderweitig geformte Mulden auf der Ober- und Unterseite des Multifunktionsbedienelements vorgesehen sein. Ferner wäre es möglich eine entsprechende Formgebung des Multifunktionsbedienelements entsprechend der Fingerhaltung bei der Drehbewegung in der fünften und der sechsten Schaltrichtung als Identifikationselement auszubilden. Ferner wären auch Erhebungen, Vorsprünge oder anderweitig gestaltete haptische Elemente als Identifikationselemente geeignet.

Nach einer weiteren bevorzugten Ausführungsform ist eine Beleuchtung an dem Multifunktionsbedienelement vorgesehen. Diese Beleuchtung kann für das gesamte Multifunktionsbedienelement vorgesehen sein oder auch nur für einzelne Elemente wie die Identifikationselemente oder das zumindest eine Auswahlelement. Die Beleuchtung kann eine aktive Beleuchtung mittel üblicher Lampen oder LED sein oder ein lumineszierendes Material umfassen.

Nach einer weiteren bevorzugten Ausführungsform ist an dem Multifunktionsbedienelement eine Anzeigeeinrichtung angeordnet. Eine solche Anzeigeeinrichtung kann ein Display oder bestimmte beleuchtete Symbole sein. Durch die Anzeigeeinrichtung kann beispielsweise die gewählte Bedienebene angezeigt werden. Ferner kann die gewählte Funktion angezeigt werden.

Die Aufgabe wird weiterhin gelöst von einem Sitz, insbesondere Fahrzeugsitz, mit einer Bedieneinrichtung zur Einstellung von Sitzparametern nach einem der vorhergehenden Ausführungsformen.

Gemäß einer weiteren bevorzugten Ausführungsform umfasst der Sitz die Komponenten Sitzkissenteil, Rückenlehne, Kopfteil und zumindest eine Armlehne. Vorzugsweise ist eine Bedienebene dem gesamten Sitz oder zumindest einer Komponente zugeordnet. Bevorzugt entspricht dabei der durch eine bestimmte Funktion geänderte Sitzparameter einer Änderung der Position oder der Höhe des gesamten Sitzes oder zumindest einer Komponente. Vorzugsweise entspricht der durch eine bestimmte Funktion geänderte Sitzparameter der Höhe des gesamten Sitzes (1) oder zumindest einer Komponente (12, 13, 14, 15) Vorzugsweise entspricht der durch eine bestimmte Funktion geänderte Sitzparameter der Ausrichtung des gesamten Sitzes oder zumindest einer Komponente. Eine Änderung der Ausrichtung entspricht dabei einer Änderung der Neigung des gesamten Sitzes oder einer bestimmten Komponente.

Mögliche Änderungen der Sitzparameter für den Gesamtsitz können somit sein: Verlagerung entlang der Längsrichtung (X1) beziehungsweise Einstellung des Sitzabstands, Verlagerung entlang der Höhenrichtung (Z1) beziehungsweise Einstellung der Sitzhöhe und Drehbewegung um eine Achse entlang der Breitenrichtung (Y1) beziehungsweise Einstellung der Sitz- oder Rückenlehnenneigung. Analog können die Armlehne, das Kopfteil und das Sitzkissen entlang der Längsrichtung (X1) und der Höhenrichtung (Z1) verlagert werden und somit die Höhe beziehungsweise die Position eingestellt werden. Ferner können sowohl Armlehne(n) als auch Kopfteil und Sitzkissenteil in ihrer Neigung verändert werden. Schließlich kann die Länge des Sitzkissenteils verändert werden.

Gemäß einer weiteren bevorzugten Ausführungsform ist eine bestimmte Schaltrichtung einer Funktion einer ersten Bedienebene einer Änderung eines Sitzparameters eines ersten Elements, welches der gesamte Sitz oder eine Komponente sein kann, bezüglich einer bestimmten Sitzrichtung (X1, Y1, Z1) zugeordnet, und die gleiche Schaltrichtung einer Funktion zumindest einer weiteren Bedienebene einer Änderung eines Sitzparameters eines zweiten Elements, welches der gesamte Sitz oder eine Komponente sein kann, bezüglich einer gleichen Sitzrichtung (X1, Y1, Z1) zugeordnet. Die Sitzrichtungen sind dabei die Längsrichtung (X1), die Breitenrichtung (Y1) und Höhenrichtung (Z1).

Demnach könnte der gesamte Sitz beispielsweise der ersten Bedienebene zugeordnet sein. Die Sitzhöhe könnte dann mit Bewegungen des Multifunktionsbedienelements entlang der dritten und vierten Schaltrichtungen (nach oben ziehen/nach unten drücken) einstellbar sein. Eine Auswahl zumindest einer weiteren Bedienebene könnte dann die Kopfstütze betreffen. Demnach könnte eine entsprechende Höheneinstellung durch eine Bewegung des Multifunktionsbedienelements entlang gleichen dritten und vierten Schaltrichtungen (nach oben ziehen/nach unten drücken) einstellbar sein. Es können somit alle Höheneinstellungen von Gesamtsitz und den einzelnen Komponenten, alle Neigungseinstellungen und alle Verlagerungseinstellungen entlang einer bestimmten Sitzrichtung (X1, Y1, Z1) vorgenommen werden. Dies vereinfacht die Bedienbarkeit der einzelnen Einstellung der Sitzparameter, da sich der Nutzer nur die entsprechenden Schaltrichtungen für eine bestimmte Art von Parameteränderungen einprägen und lediglich die entsprechende Komponente auswählen muss.

Nach einer weiteren bevorzugten Ausführungsform verursacht eine Bewegung des Multifunktionsbedienelements in einer Schaltrichtung bezüglich einer Bewegungsachse (X, Y,Z) eine gleichartige Änderung der Position und/oder der Ausrichtung des gesamten Sitzes oder zumindest einer Komponente bezüglich einer zu den Bewegungsachsen (X, Y,Z) parallelen Richtung (X1, Y1, Z1). Somit kann beispielsweise eine Höheneinstellung, welche eine Verlagerung des gesamten Sitzes oder einer Komponente entlang der Höhenrichtung (Z1) ist, durch die dritte oder vierte Schaltrichtung, welche bezüglich der Bewegungsachse Y bewegt wird, entsprechen. Weiterhin kann eine Verlagerung des gesamten Sitzes oder einer Komponente in Längsrichtung (X1) durch eine Bewegung des Multifunktionsbedienelements entlang der ersten oder zweiten Schaltrichtung erfolgen. Analog kann eine Neigung des gesamten Sitzes oder einer Komponente durch eine gleichartige Neigung des Multifunktionsbedienelements verursacht werden. Dem Nutzer kann somit intuitiv die gewünschte Einstellung vornehmen, ohne sich vorher entsprechende Schaltrichtungen einprägen zu müssen.

Nach einer weiteren bevorzugten Ausführungsform umfasst die Bedieneinrichtung eine Steuereinheit, welche ein Steuersignal des Multifunktionsbedienelements empfängt und zumindest einen Aktuator ansteuert, welcher die Parameter bezüglich der Position und oder Ausrichtung des gesamten Sitzes oder zumindest einer Komponente entsprechend verändert. Geeignete Aktuatoren sind in der Regel pneumatische, hydraulische oder elektrisch betriebene Aktoren. Die Verwendung anderweitiger Aktoren ist jedoch auch möglich.

Nach einer weiteren bevorzugten Ausführungsform ist eine Bedienebene zumindest einer Feder- und/oder Dämpfeinrichtung zugeordnet, welche in vertikaler und/oder horizontaler Richtung wirkt. Vorzugsweise entsprechen die zugehörigen Funktionen der Bedienebene den Parametereinstellungen der Feder- und/oder Dämpfeinrichtung. Demnach kann mittels einer Bewegung des Multifunktionsbedienelements entlang einer Schaltrichtung beispielsweise die Härte der Feder- und/oder Dämpfeinrichtung oder ein sonstiger Parameter dieser Einrichtung verändert, oder die Feder/Dämpfereinrichtung aktiviert oder deaktiviert werden. Vorzugsweise ist Feder- und/oder Dämpfeinrichtung, welche in vertikaler Richtung wirkt, einer anderen Bedienebene zugeordnet als die Feder- und/oder Dämpfeinrichtung, welche in horizontaler Richtung wirkt. Bevorzugt umfasst die Bedieneinrichtung eine Steuereinheit, welche ein Steuersignal des Multifunktionsbedienelements empfängt und die zumindest eine Feder- und/oder Dämpfeinrichtung steuert.

Nach einer weiteren bevorzugten Ausführungsform ist eine Bedienebene zumindest einer Sitzkomforteinrichtung zugeordnet. Bevorzugt entsprechen die zugehörigen Funktionen der Bedienebene den Parametereinstellungen der Sitzkomforteinrichtung. Vorzugsweise kann eine Sitzkomforteinrichtung eine Sitzklimatisierungseinrichtung, insbesondere eine Sitzheizung oder eine Sitzventilation sein. Bevorzugt kann die Sitzkomforteinrichtung eine Sitzkontureinstellungseinrichtung sein. Eine Sitzkontureinstellungseinrichtung kann beispielsweise eine Einstellung der Seitenkissen am Sitzkissenteil, eine Einstellung der Seitenwangen an der Rückenlehne, eine Einstellung der Kontur der Armlehne oder eine Änderung der Lordosenstütze sein. Die Änderungen der Lordosenstütze können eine Verlagerung des Lordosenstützenwölbscheitels nach oben oder unten oder eine Änderung der Wölbungsintensität der Lordosenstütze sein. Ferner könnte eine Sitzkomforteinrichtung eine Massageeinrichtung sein. Vorzugsweise umfasst die Bedieneinrichtung eine Steuereinheit, welche ein Steuersignal des Multifunktionsbedienelements empfängt und die zumindest eine Sitzkomforteinrichtung steuert.

Nach einer weiteren bevorzugten Ausführungsform ist das Multifunktionsbedienelement an dem Sitzkissenteil und/oder an einer Armlehne angeordnet. Vorzugsweise ist das Multifunktionsbedienelement an einem seitlichen Abschnitt des Sitzkissenteils und/oder der Armlehne angeordnet. Unter einem seitlichen Abschnitt sind solche Abschnitte zu verstehen, welche sich an den seitlichen Begrenzungen in Breitenrichtung (Y1) des Sitzkissenteils oder der Armlehne befinden. Eine derartige Anordnung ist für Nutzer besonders einfach zu greifen.

Nach einer weiteren bevorzugten Ausführungsform ist mittels des zumindest einen Auswahlelements sowohl eine Bedienebene auswählbar als auch eine bestimmte Funktion direkt bedienbar. Das Auswahlelement kann ein Schalter, ein Taster als auch ein Array von Schalter oder Tastern ausgestaltet sein. Ferner könnte das Auswahlelement als Joystick, als Kugelschalter oder als mehrstufiger Taster ausgestaltet sein. Das Auswahlelement könnte auch als Berührbildschirm ausgestaltet sein. Nutzer können somit die gewünschten Einstellungen der Sitzparameter durch eine entsprechende Bewegung des Multifunktionsbedienelements entlang der Schaltrichtungen als auch mittels des Auswahlelements direkt einstellen.

Nach einer weiteren bevorzugten Ausführungsform ist eine Bedienebene einer Kommunikationseinrichtung zugeordnet. Dies könnte beispielsweise eine Freisprecheinrichtung sein. Vorzugsweise ist eine Bedienebene bestimmten Fahrzeugeinstellungen zugeordnet. Derartige Fahrzeugeinstellungen können beispielsweise die Innenbeleuchtung, die Bedienung eines Radios oder Ähnliches betreffen. Es können somit auch Elemente bedient werden, welche keinen Bezug zu dem Sitz haben.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Seitenansicht eines Sitzes mit einer Bedieneinrichtung;
- Fig.2 a-d: eine Seitenansicht des Multifunktionsbedienelements;
- Fig.3 a-c: eine Seitenansicht des Multifunktionsbedienelements nach weiteren Ausführungsformen;
- Fig.4: eine Seitenansicht eines Sitzes mit einer Bedieneinrichtung nach einer weiteren Ausführungsform;
- Fig.5: eine Seitenansicht eines Sitzes mit einer Bedieneinrichtung nach einer weiteren Ausführungsform;
- Fig.6: eine Seitenansicht eines Sitzes mit einer Bedieneinrichtung nach einer weiteren Ausführungsform;
- Fig.7 a-b: eine Draufsicht des Multifunktionsbedienelements nach weiteren Ausführungsformen;
- Fig.8 a-c: eine Ansicht des Multifunktionsbedienelements nach weiteren Ausführungsformen;
- Fig.9: eine Ansicht des Multifunktionsbedienelements nach einer weiteren Ausführungsform;
- Fig.10: eine Ansicht des Multifunktionsbedienelements nach einer weiteren Ausführungsform;
- Fig.11: eine Ansicht des Multifunktionsbedienelements nach einer weiteren Ausführungsform;
- Fig.12: schematische Funktionsübersicht der Bedieneinrichtung;
- Fig.13: schematische Funktionsübersicht einer Bedienebene;
- Fig.14 bis Fig 22: Schematische Veranschaulichung einer Änderung eines Sitzparameters mit den zugehörigen Schaltrichtungen.

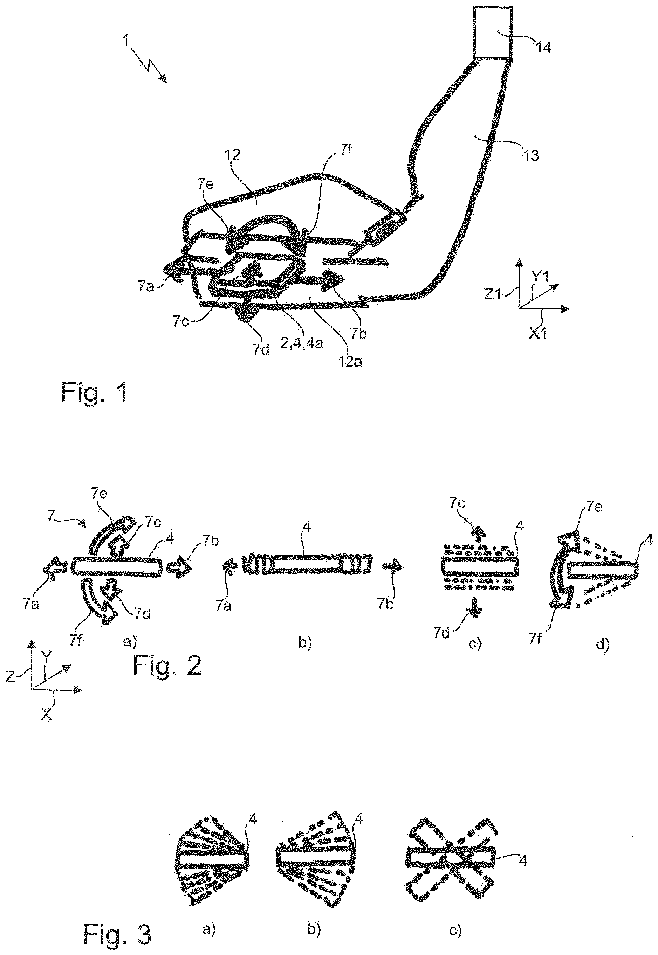

In den Figuren 1, 4 und 6 ist ein Sitz (1) insbesondere ein Fahrzeugsitz dargestellt. Der Sitz (1) umfasst die Komponenten Sitzkissenteil (12), Rückenlehne (13), Kopfteil (14) und zumindest eine Armlehne (15). Der Sitz ist entlang den Sitzrichtungen (X1, Y1, Z1) orientiert. Diese Sitzrichtungen sind die Längsrichtung (X1), die Breitenrichtung (Y1) und die Höhenrichtung (Z1).

Der Sitz (1) insbesondere Fahrzeugsitz ist mit einer Bedieneinrichtung (2) zur Einstellung von Sitzparametern (3) ausgestattet, wobei die Bedieneinrichtung (2) zumindest ein Multifunktionsbedienelement (4) umfasst, welches in zumindest fünf Schaltrichtungen (7) vorzugsweise sechs Schaltrichtungen (7) bewegbar ist, wobei jede Schaltrichtung (7) einer bestimmten Funktion (8) zuordenbar ist, welche einen Sitzparameter (3) ändert.

Die Bedieneinrichtung (2) kann weiterhin zumindest ein Auswahlelement (5) umfassen, mittels dem zumindest zwei Bedienebenen (6) auswählbar sind, wobei die den Schaltrichtungen (7) zugeordneten Funktionen (8) einer ausgewählten Bedienebene angehören. Dadurch kann eine noch größere Anzahl von Sitzparametern geändert werden.

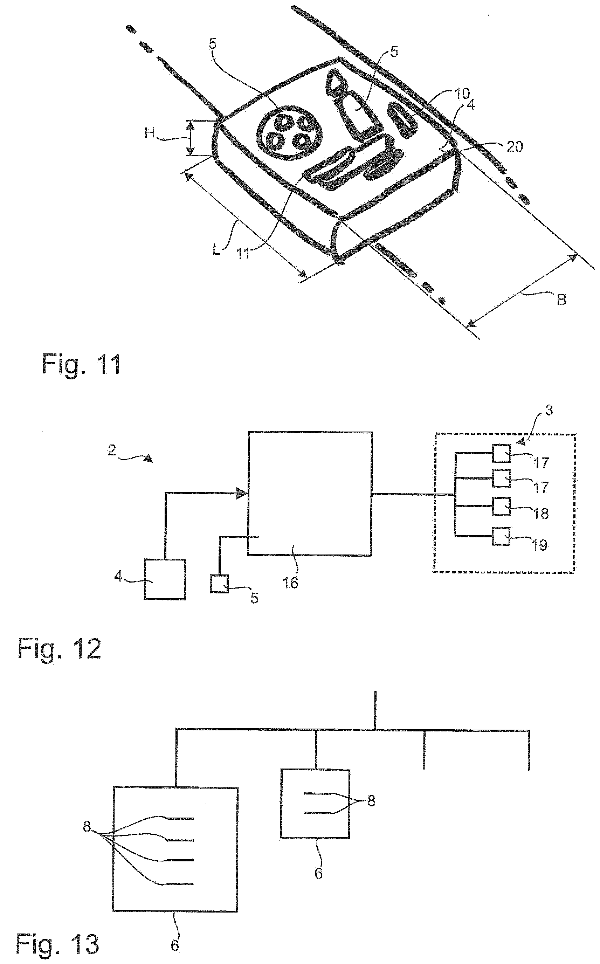

Durch das Auswahlelement (5) wird eine bestimmte Bedienebene (6) ausgewählt, welche eine Funktionengruppe, beispielsweise die Einstellung der Sitzparameter (3) für den gesamten Sitz (1) oder eine bestimmte Komponente (12, 13, 14, 15) des Sitzes (1) umfasst. Eine entsprechende Übersicht ist in Figur 13 dargestellt.

Alternativ kann mittels des zumindest einem Auswahlelements (5) sowohl eine Bedienebene (6) ausgewählt werden als auch eine bestimmte Funktion (8) direkt bedient werden.

Die Bedieneinrichtung (6) umfasst eine Steuereinheit (16), welche ein Steuersignal des Multifunktionsbedienelements (4) empfängt. Ferner wird ein entsprechendes Auswahlsignal beziehungsweise ein Steuersignal des Auswahlelements (5) empfangen, wie in Figur 12 dargestellt. Die Steuereinheit (16) steuert dann die entsprechenden Einrichtungen an, um die Sitzparameter (3) entsprechend zu ändern. Solche Einrichtungen sind Aktuatoren (17), eine oder mehrere Feder- und/oder Dämpfeinrichtung(en) (18) oder eine oder mehrere Sitzkomforteinrichtung(en) (19).

Das zumindest eine Multifunktionsbedienelement (4) kann an einem seitlichen Abschnitt (12a) des Sitzkissenteils (12) angeordnet werden. Dies ist beispielsweis in den Figuren 1, 4, 5 und 6 zu erkennen. Ferner kann das Multifunktionsbedienelement an einem seitlichen Abschnitt (15a) der Armlehne (15) angeordnet sein. Der jeweilige seitliche Abschnitt befindet sich an der seitlichen Begrenzung des Sitzkissenteils (12) oder der Armlehne (15) in der Breitenrichtung (Y1) des Sitzes (1).

Das Multifunktionsbedienelement (4) ist dabei tafelförmig ausgestaltet.

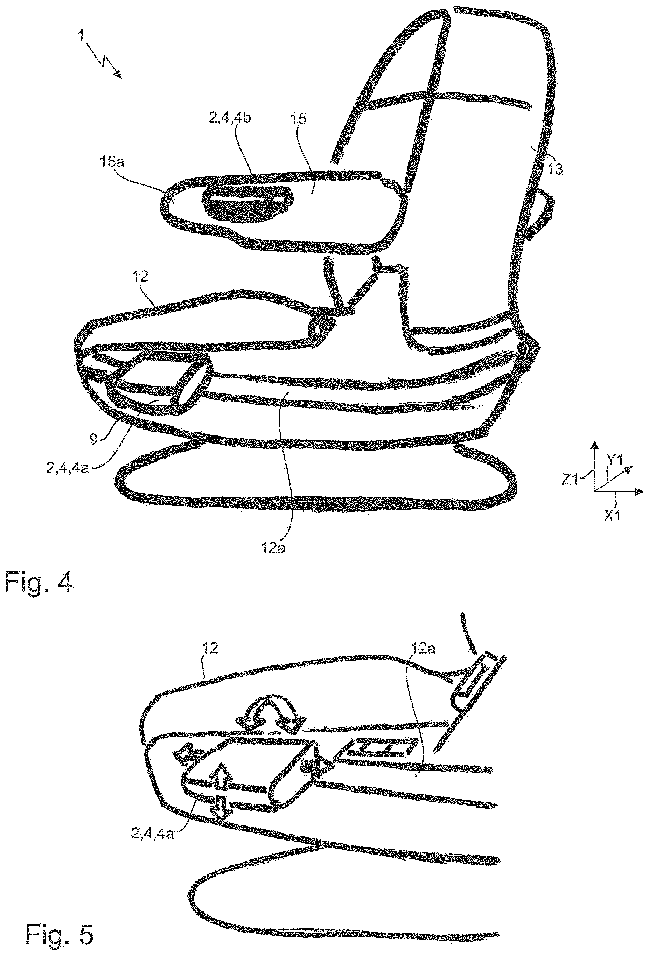

Während in Figur 1 ein Sitz (1) mit nur einem Multifunktionsbedienelement (4) dargestellt ist, zeigen die Figuren 4 und 5 eine Ausführungsform, in welcher der Sitz zwei Multifunktionsbedienelemente (4) aufweist. Dabei ist das erste Multifunktionsbedienelement (4a) an dem Sitzkissenteil (12) und das zweite Multifunktionsbedienelement (4b) an der Armlehne (15) angeordnet. Im Falle von zwei vorhandenen Multifunktionsbedienelementen (4, 4a, 4b) können beide Multifunktionsbedienelemente (4, 4a, 4b) die gleichen Bedienebenen (6) mit den dazugehörigen Funktionen (8) aufweisen oder unterschiedliche Bedienebenen (6).

Das jeweilige Multifunktionsbedienelement (4) ist in sechs Schaltrichtungen (7, 7a-7f) bewegbar, wobei das Multifunktionsbedienelement (4) drei Bewegungsachsen (X, Y, Z) aufweist. Dies ist in den Figuren 2a bis 2d gezeigt. Entlang einer Bewegungsachse (X, Y, Z) sind jeweils zwei entgegengesetzte Schaltrichtungen (7) orientiert.

In Figur 2b sind eine erste (7a) und eine zweite Schaltrichtung (7b) einer translatorischen Bewegung des Multifunktionsbedienelements (4) entlang einer ersten Bewegungsachse (X) in entgegengesetzten Richtungen gezeigt. Das Multifunktionsbedienelement kann somit durch Ziehen oder Schieben entlang der ersten (7a) beziehungsweise zweiten Schaltrichtung (7b) bewegt werden. Die erste Bewegungsachse (X) verläuft dabei entlang der horizontalen Längsrichtung (X1) des Sitzes (1).

Die dritte (7c) und die vierte Schaltrichtung (7d) entsprechen einer translatorischen Bewegung des Multifunktionsbedienelements (4) entlang einer zweiten Bewegungsachse (Z) in jeweils entgegengesetzten Richtungen.

Alternativ können die dritte (7c) und die vierte Schaltrichtung (7d) einer Drehbewegung des Multifunktionsbedienelements (4) um die erste Bewegungsachse (X) in entgegengesetzten Richtungen entsprechen. Die zweite Bewegungsachse (Z) verläuft dabei entlang der Höhenrichtung (Z1) des Sitzes und ist senkrecht zu der ersten Bewegungsachse (X). Sowohl eine translatorische Bewegung des Multifunktionsbedienelements (4) entlang der zweiten Bewegungsachse (Z) als auch eine Drehbewegung des Multifunktionsbedienelements um die erste Bewegungsachse (X) bedeutet für die sich im Sitz befindliche Person eine Bewegung des Multifunktionsbedienelements nach oben oder unten. Das Multifunktionselement (4) ist dabei mittels eines Gelenks mit dem Sitzkissenteil (12, 12a) oder der Armlehne (15, 15a) verbunden.

Die fünfte (7e) und sechste Schaltrichtung (7f) entsprechen einer Drehbewegung des Multifunktionsbedienelements (4) um die dritte Bewegungsachse (Y) in jeweils entgegengesetzte Richtungen. Die dritte Bewegungsachse (Y) verläuft entlang der Breitenrichtung (Y1) des Sitzes (1) und ist senkrecht zu der ersten Bewegungsachse (X) und der zweiten Bewegungsachse (Z).

Der Drehpunkt kann dabei mittig, außermittig des Multifunktionsbedienelements (4) angeordnet sein wie in Figur 3c dargestellt. Entsprechend der Wahl des Drehpunkts ergibt sich eine bestimmte Drehbewegung des Multifunktionsbedienelements (4).

Alternativ könnte der Drehpunkt an einem vorderen Ende des Multifunktionsbedienelements (4) angeordnet sein, wie in Figur 3a dargestellt. In Figur 3b ist eine Ausführungsform gezeigt, in welcher der Drehpunkt am hinteren Ende des Multifunktionsbedienelements (4) angeordnet ist.

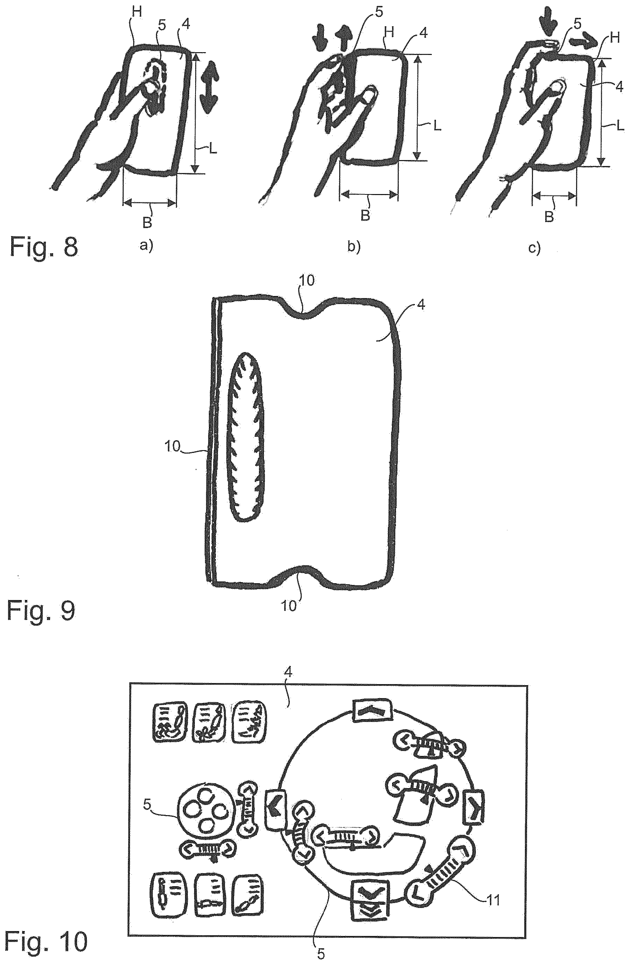

Das Auswahlelement (5) ist auf einer Oberfläche des tafelförmigen Multifunktionsbedienelements (4) angeordnet. In Figur 8 sind verschiedene mögliche Oberflächen gezeigt. In Figur 8a ist das Auswahlelement (5) auf der Oberfläche angeordnet, welche durch die Länge (L) und die Breite (B) des Multifunktionsbedienelements (4) begrenzt wird. In Figur 8b ist das Auswahlelement (5) auf der Oberfläche angeordnet, welche durch die Höhe (H) und die Länge (L) des Multifunktionsbedienelements (4) begrenzt wird. In Figur 8c ist das Auswahlelement (5) auf der Oberfläche angeordnet, welche durch die Höhe (H) und die Breite (B) des Multifunktionsbedienelements (4) begrenzt wird. Das Auswahlelement (5) kann ein mehrstufiger Schalter oder Taster sein. In den Figuren 8a bis 8c wird beispielsweise ein mehrstufiger Schiebeschalter gezeigt. In Figur 11 wird ein kreuzförmiger Wipptaster gezeigt. Ferner kann das Multifunktionsbedienelement (4) mit haptischen Elementen (9) und / oder einem Grip- Belag (20) ausgestattet sein.

In den Figuren 10 und 11 ist eine Ausführungsform gezeigt, in welcher an dem Multifunktionsbedienelement (4) eine Anzeigeeinrichtung (11) angeordnet ist. Mittels einer solchen Anzeigeeinrichtung können die ausgewählten Bedienebenen und die ausgewählten Funktionen angezeigt werden.

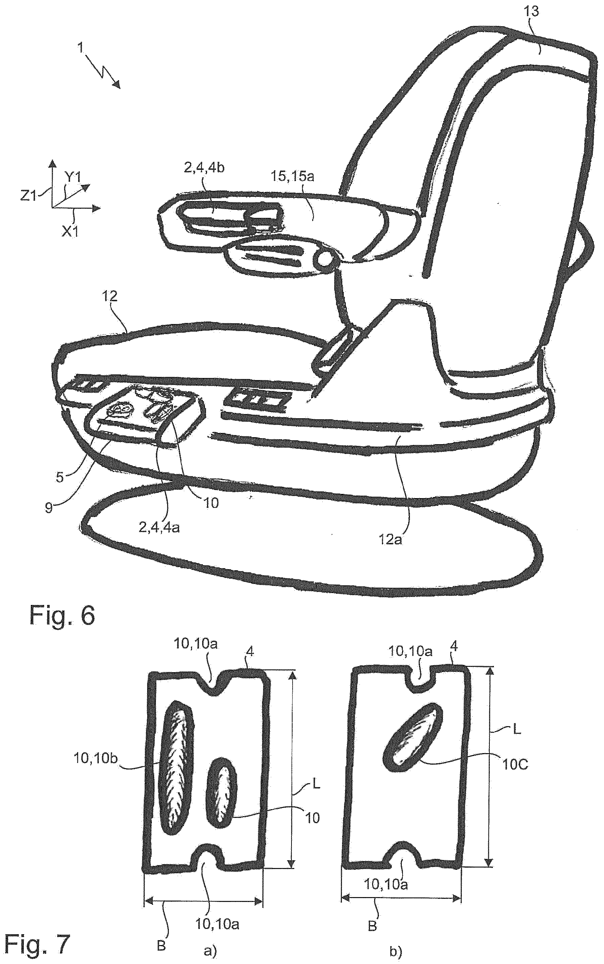

Ferner ist das Multifunktionsbedienelement (4) mit Identifikationselementen (10) versehen, mittels welcher die Schaltrichtungen identifizierbar sind. In den Figuren 7 a/b, 8, 9 sind solche Identifikationselemente (10) erkennbar.

In Figur 7 sind Identifikationselemente in Form von Mulden (10a) am vorderen und hinteren Ende des Multifunktionsbedienelements (4) dargestellt, welche zur Identifikation der ersten und zweiten Schaltrichtungen (ziehen/schieben) dienen können. Mit vorderem und hinterem Ende sind die Oberflächen gemeint, welche durch die Höhe (H) und die Breite (B) des Multifunktionsbedienelements (4) begrenzt sind.

Ferner können Mulden (10b) auf der Ober- und Unterseite des Multifunktionsbedienelements vorgesehen sein, welche zur Identifikation der dritten und vierten Schaltrichtungen (nach oben ziehen/nach unten drücken) dienen können. Die Ober- und Unterseite sind die sich gegenüberliegenden Oberflächen, welche durch die Länge (L) und die Breite (B) des Multifunktionsbedienelements (4) begrenzt sind.

Zur Identifikation der fünften (7e) und der sechsten Schaltrichtung (7f) ist in Figur 7b eine Mulde (10c) mit einer Formgebung entsprechend der Fingerhaltung bei der Drehbewegung in der fünften und der sechsten Schaltrichtung.

Die jeweiligen Identifikationselemente (10) können auch beleuchtet sein.

Eine bestimmte Schaltrichtung (7) einer Funktion (8) einer ersten Bedienebene (6) kann einer Änderung eines Sitzparameters (3) eines ersten Elements (1, 12, 13, 14, 15), welches der gesamte Sitz (1) oder eine Komponente (12, 13, 14, 15) sein kann, bezüglich einer bestimmten Sitzrichtung (X1, Y1, Z1) zugeordnet sein. Die gleiche Schaltrichtung (7) einer Funktion (8) zumindest einer weiteren Bedienebene (6) kann einer Änderung eines Sitzparameters (3) eines zweiten Elements (1, 12, 13, 14, 15), welches der gesamte Sitz (1) oder eine Komponente (12, 13, 14, 15) sein kann, bezüglich einer gleichen Sitzrichtung (X1, Y1, Z1) zugeordnet sein.

Ferner kann eine Bewegung des Multifunktionsbedienelements (4) in einer Schaltrichtung (7) bezüglich einer Bewegungsachse (X, Y, Z) eine gleichartige Änderung der Position und/oder der Ausrichtung des gesamten Sitzes (1) oder zumindest einer Komponente (12, 13, 14, 15) bezüglich einer zu den Bewegungsachsen (X, Y, Z) parallelen Sitzrichtung (X1, Y1, Z1) verursachen.

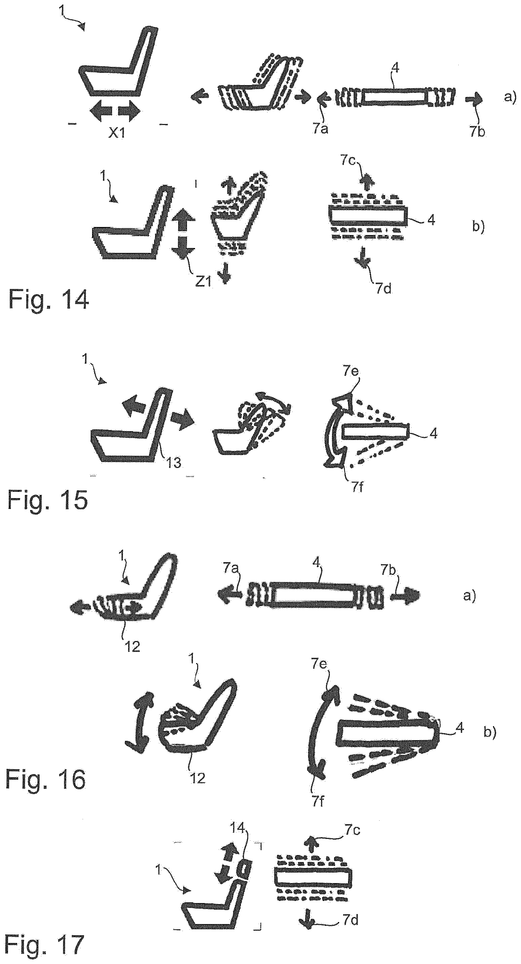

In den Figuren 14 bis 22 sind entsprechende Funktionen mit den dazugehörigen Schaltrichtungen nach einer Ausführungsform dargestellt. Tabelle 1 gibt dazu eine Übersicht.

Nach Figur 14a sind in der Bedienebene Gesamtsitz (1) die erste (7a) und zweite (7b) Schaltrichtung (Schieben-Ziehen, shift) der Sitzlängsverstellung. Bei einem "Schieben verfährt der Gesamtsitz (1) nach vorne. Bei einem "Ziehen" verfährt der Gesamtsitz (1) nach hinten.

Nach Figur 14b sind in der Bedienebene Gesamtsitz (1) die dritte (7c) und vierte (7d) Schaltrichtung (Griff nach unten/oben drücken; Push-Pull) der Sitzhöheneinstellung zugeordnet. Bei einem "nach oben drücken (pull)" verfährt der Gesamtsitz (1) nach oben. Bei einem "Griff nach unten drücken (push)" verfährt der Gesamtsitz (1) nach unten.

Nach Figur 15 sind in der Bedienebene Gesamtsitz (1) oder Rückenlehne (13) die fünfte (7e) und sechste (7f) Schaltrichtung (Griff Kippen (flip)) der Lehnenneigungseinstellung oder der Gesamtsitzneigungseinstellung zugeordnet. Bei einem "nach hinten kippen" neigt sich die Rückenlehne (13) / der Gesamtsitz (1) nach hinten. Bei einem "nach vorne kippen" neigt sich die Rückenlehne (13) / der Gesamtsitz (1) nach vorne.

Nach Figur 16a sind in der Bedienebene Sitzkissenteil (12) die erste (7a) und zweite (7b) Schaltrichtung (Schieben-Ziehen, shift) der Sitzkissenlängenverstellung zugeordnet. Bei einem "Schieben" wird die Sitzkissenlänge länger. Bei einem "Ziehen" wird die Sitzkissenlänge kürzer.

Nach Figur 16b sind in der Bedienebene Sitzkissenteil (12) die fünfte (7e) und sechste (7f) Schaltrichtung (Griff Kippen (flip)) der Sitzkissenneigungseinstellung zugeordnet. Bei einem "nach hinten kippen" neigt sich die das Sitzkissen (12) nach hinten. Bei einem "nach vorne kippen" neigt sich das Sitzkissen (12) nach vorne.

Nach Figur 17 sind in der Bedienebene Kopfteil (14) die dritte (7c) und vierte (7d) Schaltrichtung (Griff nach unten/oben drücken; Push-Pull) der Kopfteilhöheneinstellung zugeordnet. Bei einem "nach oben drücken (pull)" verfährt das Kopfteil (14) nach oben. Bei einem "Griff nach unten drücken (push)" verfährt das Kopfteil (14) nach unten.

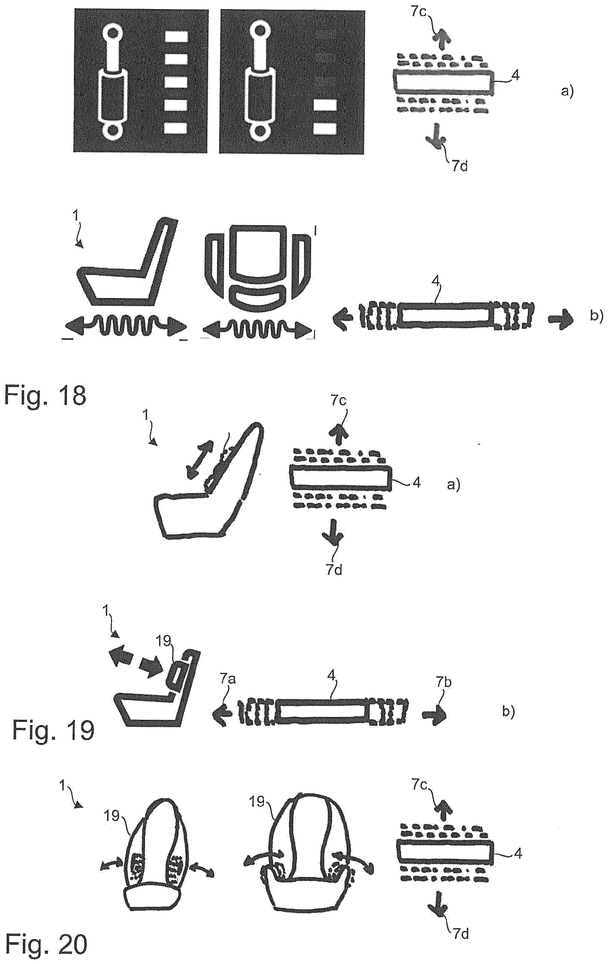

Nach Figur 18a sind in der Bedienebene Feder- und/oder Dämpfeinrichtung (18) die dritte (7c) und vierte (7d) Schaltrichtung (Griff nach unten/oben drücken; Push-Pull) der Feder- und/oder Dämpfungscharakteristik zugeordnet. Bei einem "nach oben drücken (pull)" wird die Feder- und/oder Dämpfungscharakteristik härter. Bei einem "Griff nach unten drücken (push)" wird die Feder- und/oder Dämpfungscharakteristik weicher. Die Betätigung in der dritten (7c) und vierten (7d) Schaltrichtung kann mehrstufig erfolgen, d.h. eine weitere Betätigung in gleicher Richtung macht Feder- und/oder Dämpfungscharakteristik noch härter beziehungsweise weicher.

Nach Figur 18b sind in der Bedienebene Feder- und/oder Dämpfeinrichtung (18) die erste (7a) und zweite (7b) Schaltrichtung (Schieben-Ziehen, shift) in der X-Richtung zugeordnet. Bei einem "Schieben" wird die Feder- und/oder Dämpfeinrichtung (18) eingeschaltet. Bei einem "Ziehen" wird die Feder- und/oder Dämpfeinrichtung (18) ausgeschaltet

Nach Figur 19a und 19b sind in der Bedienebene Sitzkomforteinrichtung (19), Lordosenstütze die dritte (7c) und vierte (7d) Schaltrichtung (Griff nach unten/oben drücken; Push-Pull) der Verlagerung des Lordosenstützenwölbscheitels zugeordnet. Bei einem "nach oben drücken (pull)" wird der Lordosenstützenwölbscheitel nach oben verlagert. Bei einem "Griff nach unten drücken (push)" wird der Lordosenstützenwölbscheitel nach unten verlagert.

Nach Figur 19a und 19b sind in der Bedienebene Sitzkomforteinrichtung (19), Lordosenstütze die erste (7a) und zweite (7b) Schaltrichtung (Schieben-Ziehen, shift) der Einstellung der Wölbung der Lordosenstütze zugeordnet. Bei einem "Schieben" wird die Wölbung der Lordosenstütze stärker. Bei einem "Ziehen" wird die Wölbung der Lordosenstütze schwächer.

Nach Figur 20 sind in der Bedienebene Sitzkomforteinrichtung (19), Seitenwangen der Rückenlehne, Seitenwangen des Sitzkissenteils (12) die dritte (7c) und vierte (7d) Schaltrichtung (Griff nach unten/oben drücken; Push-Pull) der Einstellung der Seitenwangen der Rückenlehne (13), beziehungsweise der Seitenwangen des Sitzkissenteils (12) zugeordnet. Bei einem "nach oben drücken (pull)" werden die Seitenwangen in Rückenlehne (13) oder Sitzkissenteil (12) enger. Bei einem "Griff nach unten drücken (push)" werden die Seitenwangen in Rückenlehne (13) oder Sitzkissenteil (12) weiter.

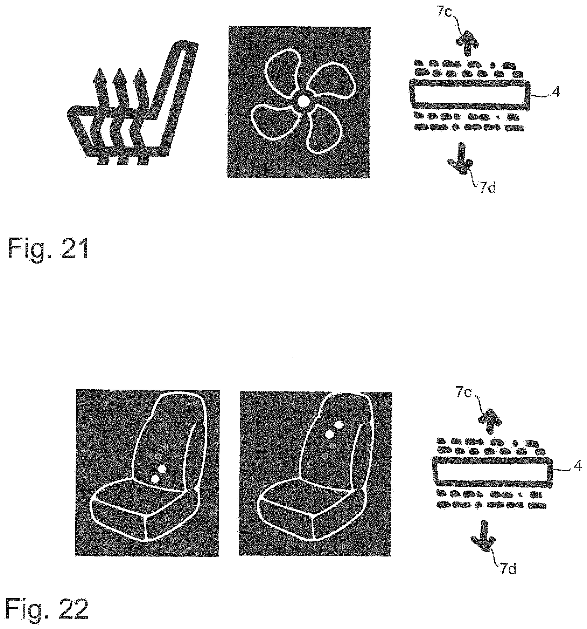

Nach Figur 21 sind in der Bedienebene Sitzkomforteinrichtung (19), Sitzklimatisierung (Sitzheizung, Sitzventilation) die dritte (7c) und vierte (7d) Schaltrichtung (Griff nach unten/oben drücken; Push-Pull) der Einstellung der Sitzkomforteinrichtung zugeordnet. Durch Ziehen oder Drücken (Push-Pull) wird die Sitzheizung, Sitzventilation eingeschaltet, stufenweise verstellt, und ausgeschaltet. Folgende Stufen sind vorgesehen: Ziehen - Heizung (Ventilation) an, weiteres Ziehen - Heizstufe (Ventilationsstufe) höher, Drücken: Heizstufe (Ventilationsstufe) niedriger, Weiteres Drücken: Heizung (Ventilation) aus.

Nach Figur 22 sind in der Bedienebene Sitzkomforteinrichtung (19), Massageeinrichtung die dritte (7c) und vierte (7d) Schaltrichtung (Griff nach unten/oben drücken; Push-Pull) der Einstellung der Massageeinrichtung zugeordnet. Durch Ziehen oder Drücken (Push-Pull) wird die Massagefunktion eingeschaltet, stufenweise verstellt, und ausgeschaltet.

**Tabelle 1**

| Bedienebene | Funktion | Schaltrichtung | Figur |
|---|---|---|---|
| Gesamtsitz (1) | Sitz nach vorne/hinten Längsrichtung (X1) | erste (7a) / zweite (7b) | 14a |
| Gesamtsitz (1) | Sitz nach oben/unten Höhenrichtung (Z1) | dritte (7c) / vierte (7d) | 14b |
| Gesamtsitz (1) | Sitz neigen | fünfte (7e) / sechste (7f) | - |
| | Bezüglich Achse entlang Breitenrichtung (Y1) | | |
| Rückenlehne (13) | Rückenlehne neigen | fünfte (7e) / sechste (7f) | 15 |
| Sitzkissenteil (12) | Sitzkissenlänge | erste (7a) / zweite (7b) | 16a |
| Sitzkissenteil (12) | Sitzkissenneigungseinstellung | fünfte (7e) / sechste (7f) | 16b |
| Kopfteil (14) | Kopfteil nach vorne/hinten Längsrichtung (X1) | erste (7a) / zweite (7b) | 17 |
| Kopfteil (14) | Kopfteil nach oben/unten Höhenrichtung (Z1) | dritte (7c) / vierte (7d) | - |
| Kopfteil (14) | Kopfteilneigen Bezüglich Achse entlang Breitenrichtung (Y1) | fünfte (7e) / sechste (7f) | - |
| Feder- und/oder Dämpfeinrichtung (18) in X1, Y1, Z1 Richtung | Feder- und/oder Dämpfungscharakteristik wird weicher oder härter | dritte (7c) / vierte (7d) mehrstufig | 18a |
| Feder- und/oder Dämpfeinrichtung (18) in X1, Y1, Z1 Richtung | Feder- und/oder Dämpfeinrichtung ein oder ausschalten | erste (7a) / zweite (7b) | 18b |
| Sitzkomforteinrichtung (19) Lordosenstütze | Einstellung der Wölbung der Lordosenstütze | erste (7a) / zweite (7b) | 19b |
| Sitzkomforteinrichtung (19) Lordosenstütze | Lordosenstützenwölbscheitel nach oben/unten | dritte (7c) / vierte (7d) | 19a |
| Sitzkomforteinrichtung (19), Seitenwangen der Rückenlehne (13), Seitenwangen des Sitzkissenteils (12) | Einstellung der Seitenwangen der Rückenlehne (13), Seitenwangen des Sitzkissenteils (12) | dritte (7c) / vierte (7d) | 20 |
| Sitzkomforteinrichtung (19) Sitzheizung | Sitzheizung ein- ausschalten beziehungsweise einstellen | dritte (7c) / vierte (7d) mehrstufig | 21 |
| Sitzkomforteinrichtung (19), Sitzventilation | Sitzventilation ein- ausschalten beziehungsweise einstellen | dritte (7c) / vierte (7d) mehrstufig | 21 |
| Sitzkomforteinrichtung (19), Massageeinrichtung | Massageeinrichtung einausschalten beziehungsweise einstellen | dritte (7c) / vierte (7d) mehrstufig | 22 |

### Bezugszeichenliste

- 1: Sitz
- 2: Bedieneinrichtung
- 3: Sitzparameter
- 4: Multifunktionsbedienelement
- 4a: erstes Multifunktionsbedienelement
- 4b: zweites Multifunktionsbedienelement
- 5: Auswahlelement
- 6: Bedienebene
- 7: Schaltrichtung
- 7a: erste Schaltrichtung
- 7b: zweite Schaltrichtung
- 7c: dritte Schaltrichtung
- 7d: vierte Schaltrichtung
- 7e: fünfte Schaltrichtung
- 7f: sechste Schaltrichtung
- 8: Funktion
- 9: haptische Elemente
- 10: Identifikationselement
- 10a: Mulde
- 10b: Mulde
- 10c: Mulde
- 11: Anzeigeeinrichtung
- 12: Sitzkissenteil
- 12a: seitlicher Abschnitt des Sitzkissenteils
- 13: Rückenlehne
- 14: Kopfteil
- 15: Armlehne
- 15a: seitlicher Abschnitt der Armlehne
- 16: Steuereinheit
- 17: Aktuator
- 18: Feder- und/oder Dämpfeinrichtung
- 19: Sitzkomforteinrichtung
- X: erste Bewegungsachse
- Y: dritte Bewegungsachse
- Z: zweite Bewegungsachse
- X1: Längsrichtung
- Y1: Breitenrichtung
- Z1: Höhenrichtung
- L: Länge des Multifunktionsbedienelements
- B: Breite des Multifunktionsbedienelements
- H: Höhe des Multifunktionsbedienelements

## Patentansprüche

1. Bedieneinrichtung (2) zur Einstellung von Sitzparametern (3) eines Sitzes (1), insbesondere eines Fahrzeugsitzes,
**dadurch gekennzeichnet, dass**
die Bedieneinrichtung (2) zumindest ein Multifunktionsbedienelement (4) umfasst, welches in zumindest fünf Schaltrichtungen (7) bewegbar ist, wobei jede Schaltrichtung (7) einer bestimmten Funktion (8) zuordenbar ist, welche einen Sitzparameter (3) ändert, wobei das Multifunktionsbedienelement (4) tafelförmig ausgestaltet ist, wobei die Bedieneinrichtung (2) zumindest ein Auswahlelement (5) umfasst, mittels dem zumindest zwei Bedienebenen (6) auswählbar sind, wobei die den Schaltrichtungen (7) zugeordneten Funktionen (8) einer ausgewählten Bedienebene angehören, wobei das Auswahlelement (5) auf einer Oberfläche des Multifunktionsbedienelements (4) angeordnet ist.

2. Bedieneinrichtung (2) nach Anspruch 1,
**dadurch gekennzeichnet, dass**
die Bedieneinrichtung (2) ein einziges Multifunktionsbedienelement (4) oder zwei Multifunktionsbedienelemente (4) oder mehrere Multifunktionsbedienelemente (4) umfasst.

3. Bedieneinrichtung (2) nach einem der vorhergehenden Ansprüche,
**dadurch gekennzeichnet, dass**
das Multifunktionsbedienelement (4) in sechs Schaltrichtungen (7) bewegbar ist, wobei das Multifunktionsbedienelement (4) drei Bewegungsachsen (X, Y, Z) aufweist, wobei jeweils zwei entgegengesetzte Schaltrichtungen (7) entlang einer Bewegungsachse (X, Y, Z) orientiert sind, wobei eine erste (7a) und eine zweite Schaltrichtung (7b) einer translatorischen Bewegung des Multifunktionsbedienelements (4) entlang der ersten Bewegungsachse (X), wobei eine dritte (7c) und eine vierte Schaltrichtung (7d) einer translatorischen Bewegung des Multifunktionsbedienelements (4) entlang einer zweiten Bewegungsachse (Y) oder einer Drehbewegung des Multifunktionsbedienelements (4) um die erste Bewegungsachse (X) entsprechen, wobei eine fünfte (7e) und eine sechste Schaltrichtung (7f) einer Drehbewegung des Multifunktionsbedienelements (4) um die dritte Bewegungsachse (Z) entsprechen.

4. Bedieneinrichtung (2) nach einem der vorhergehenden Ansprüche,
**dadurch gekennzeichnet, dass**
das Multifunktionsbedienelement (4) eine Rückstelleinheit umfasst, so dass das Multifunktionsbedienelement (4) nach einer Auslenkung entlang einer bestimmten Schaltrichtung (7) nach einer vorbestimmten Zeit mittels der Rückstelleinheit in seine Ausgangstellung verlagerbar ist.

5. Bedieneinrichtung (2) nach einem der vorhergehenden Ansprüche,
**dadurch gekennzeichnet, dass**
das Multifunktionsbedienelement (4) mit haptischen Elementen (9) und/oder einem Grip- Belag (20) ausgestattet ist, wobei das Multifunktionsbedienelement (4) mit zumindest einem Identifikationselement (10) versehen ist, mittels welcher die Schaltrichtungen (7) identifizierbar sind und/oder eine Beleuchtung an dem Multifunktionsbedienelement (4) vorgesehen ist.

6. Bedieneinrichtung (2) nach einem der vorhergehenden Ansprüche,
**dadurch gekennzeichnet, dass**
an dem Multifunktionsbedienelement (4) eine Anzeigeeinrichtung (11) angeordnet ist.

7. Sitz (1) insbesondere Fahrzeugsitz, mit einer Bedieneinrichtung (2) zur Einstellung von Sitzparametern (3) nach einem der vorhergehenden Ansprüche 1 bis 6.

8. Sitz (1) nach Anspruch 7,
**dadurch gekennzeichnet, dass**
der Sitz (1) die Komponenten Sitzkissenteil (12), Rückenlehne (13), Kopfteil (14) und
zumindest eine Armlehne (15) umfasst, wobei eine Bedienebene (6) dem gesamten Sitz (1) oder zumindest einer Komponente (12, 13, 14, 15) zugeordnet ist, wobei der durch die bestimmte Funktion geänderte Sitzparameter (3) einer Änderung der Position der Höhe des gesamten Sitzes (1) oder zumindest einer Komponente (12, 13, 14, 15) und / oder der Höhe des gesamten Sitzes (1) oder zumindest einer Komponente (12, 13, 14, 15) und /oder der Ausrichtung des gesamten Sitzes (1) oder zumindest einer Komponente (12, 13, 14, 15) entspricht.

9. Sitz (1) nach Anspruch 8,
**dadurch gekennzeichnet, dass**
eine bestimmte Schaltrichtung (7) einer Funktion (8) einer ersten Bedienebene (6) einer Änderung eines Sitzparameters (3) eines ersten Elements (1, 12, 13, 14, 15), welches der gesamte Sitz (1) oder eine Komponente (12, 13, 14, 15) sein kann, bezüglich einer bestimmten Sitzrichtung (X1, Y1, Z1) zugeordnet ist und die gleiche Schaltrichtung (7) einer Funktion (8) zumindest einer weiteren Bedienebene (6) einer Änderung eines Sitzparameters (3) eines zweiten Elements (1, 12, 13, 14, 15), welches der gesamte Sitz (1) oder eine Komponente (12, 13, 14, 15) sein kann, bezüglich einer gleichen Sitzrichtung (X1, Y1, Z1) zugeordnet ist.

10. Sitz (1) nach Anspruch 8 oder 9,
**dadurch gekennzeichnet, dass**
eine Bewegung des Multifunktionsbedienelements (4) in einer Schaltrichtung (7) bezüglich einer der Bewegungsachsen (X, Y, Z) eine gleichartige Änderung der Position und/oder der Ausrichtung des gesamten Sitzes (1) oder zumindest einer Komponente (12, 13, 14, 15B) bezüglich einer zu den Bewegungsachsen (X, Y, Z) parallelen Sitzrichtung (X1, Y1, Z1) verursacht.

11. Sitz (1) nach einem der vorhergehenden Ansprüche 7 bis 10,
**dadurch gekennzeichnet, dass**
die Bedieneinrichtung (6) eine Steuereinheit (16) umfasst, welche ein Steuersignal des Multifunktionsbedienelements (4) empfängt und zumindest einen Aktuator (17) ansteuert, welcher die Parameter bezüglich der Position und oder Ausrichtung des gesamten Sitzes (1) oder zumindest einer Komponente (12, 13, 14, 15) entsprechend verändert.

12. Sitz (1) nach einem der vorhergehenden Ansprüche 7 bis 11,
**dadurch gekennzeichnet, dass**
eine Bedienebene (6) zumindest einer Feder- und/oder Dämpfeinrichtung (18) zugeordnet ist, welche in vertikaler und/oder horizontaler Richtung wirkt, wobei die zugehörigen Funktionen (8) der Bedienebene den Parametereinstellungen der Feder- und/oder Dämpfeinrichtung (18) entsprechen, wobei die Bedieneinrichtung (2) eine Steuereinheit (16) umfasst, welche ein Steuersignal des Multifunktionsbedienelements (4) empfängt und die zumindest eine Feder- und/oder Dämpfeinrichtung (18) steuert, wobei eine Bedienebene (6) zumindest einer Sitzkomforteinrichtung (19) zugeordnet ist, wobei die zugehörigen Funktionen (8) der Bedienebene (6) den Parametereinstellungen der Sitzkomforteinrichtung (19) entsprechen, wobei die Sitzkomforteinrichtung (19) eine Sitzklimatisierungseinrichtung und/oder eine Sitzkontureinstellungseinrichtung und/oder eine Massageeinrichtung ist, wobei die Bedieneinrichtung (2) eine Steuereinheit (16) umfasst, welche ein Steuersignal des Multifunktionsbedienelements (4) empfängt und die zumindest eine Sitzkomforteinrichtung (19) steuert.

13. Sitz (1) nach einem der vorhergehenden Ansprüche 7 bis 12,
**dadurch gekennzeichnet, dass**
das Multifunktionsbedienelement (4) an dem Sitzkissenteil (12) und/oder an einer Armlehne (15) angeordnet ist, wobei das Multifunktionsbedienelement (4) an einem seitlichen Abschnitt (12a, 15a) des Sitzkissenteils (12) und/oder der Armlehne (15) angeordnet ist.

14. Sitz (1) nach einem der vorhergehenden Ansprüche 7 bis 13,
**dadurch gekennzeichnet, dass**
mittels des zumindest einem Auswahlelements (5) sowohl eine Bedienebene (6) auswählbar ist als auch eine bestimmte Funktion (8) direkt bedienbar ist.

## Claims

1. Operating device (2) for setting seat parameters (3) of a seat (1), in particular a vehicle seat,
**characterized in that**
the operating device (2) comprises at least one multifunction operating element (4), which is movable in at least five switching directions (7), wherein each switching direction (7) can be assigned to a particular function (8) which changes a seat parameter (3), the multifunction operating element (4) is designed in tabular form, wherein the operating device (2) comprises at least one selection element (5) by means of which at least two operating levels (6) can be selected, wherein the functions (8) assigned to the switching directions (7) belong to a selected operating level, wherein the selection element (5) is arranged on a surface of the multifunction operating element (4).

2. Operating device (2) according to claim 1,
**characterized in that**
the operating device (2) comprises a single multifunction operating element (4) or two multifunction operating elements (4) or a plurality of multifunction operating elements (4).

3. Operating device (2) according to any one of the preceding claims,
**characterized in that**
the multifunction operating element (4) is movable in six switching directions (7), wherein the multifunction operating element (4) has three axes of movement (X, Y, Z), wherein each two opposite switching directions (7) are oriented along a movement axis (X, Y, Z), wherein a first (7a) and a second switching direction (7b) correspond to a translational movement of the multifunction operating element (4) along the first axis of movement (X), wherein a third (7c) and a fourth switching direction (7d) correspond to a translational movement of the multifunction operating element (4) along a second movement axis (Y) or a rotational movement of the multifunction operating element (4) about the first movement axis (X), wherein a fifth (7e) and a sixth switching direction (7f) correspond to a rotational movement of the multifunction operating element (4) about the third axis of movement (Z).

4. Operating device (2) according to one of the preceding claims,
**characterized in that**
the multifunction operating element (4) comprises a reset unit, so that the multifunction operating element (4) is displaceable into its starting position after a deflection along a specific switching direction (7) after a predetermined time by means of the reset unit.

5. Operating device (2) according to any one of the preceding claims,
**characterized in that**
the multifunction operating element (4) is equipped with haptic elements (9) and/or a grip layer (20), wherein the multifunction operating element (4) is provided with at least one identification element (10), by means of which the switching directions (7) are identifiable and/or an illumination is provided on the multifunction operating element (4).

6. Operating device (2) according to any one of the preceding claims,
**characterized in that**
a display device (11) is arranged on the multifunction operating element (4).

7. Seat (1), in particular vehicle seat, with an operating device (2) for setting seat parameters (3) according to one of the preceding claims 1 to 6.

8. Seat (1) according to claim 7,
**characterized in that**
the seat (1) comprises the components seat cushion section (12), backrest (13), headrest (14) and at least one armrest (15), wherein one operating level (6) is assigned to the entire seat (1) or at least to one component (12, 13, 14, 15), wherein the seat parameter (3) changed by the specific function corresponds to a change in the position of the height of the entire seat (1) or to at least one component (12, 13, 14, 15) and/or to the height of the entire seat (1) or to at least one component (12, 13, 14, 15) and/or to the orientation of the entire seat (1) or to at least one component (12, 13, 14, 15).

9. Seat (1) according to claim 8,
**characterized in that**
a specific switching direction (7) is assigned to a function (8) of a first operating level (6) of a change in a seat parameter (3) of a first element (1, 12, 13, 14, 15), which may be the entire seat (1) or may be a component (12, 13, 14, 15), with respect to a certain seat direction (X1, Y1, Z1) and the same switching direction (7) of a function (8) is assigned to at least one further operating level (6) of a change in a seat parameter (3) of a second element (1, 12, 13, 14, 15), which may be the entire seat (1) or a component (12, 13, 14, 15), with respect to a same seat direction (X1, Y1, Z1).

10. Seat (1) according to claim 8 or 9,
**characterized in that**
a movement of the multifunction operating element (4) in a switching direction (7) with respect to one of the axes of movement (X, Y, Z) causes a similar change in position and/or orientation of the entire seat (1) or at least of one component (12, 13, 14, 15B) with respect to a seating direction (X1, Y1, Z1) parallel to the axes of movement (X, Y, Z).

11. Seat (1) according to any one of the preceding claims 7 to 10,
**characterized in that**
the operating device (6) comprises a control unit (16) which receives a control signal from the multifunction operating element (4) and controls at least one actuator (17), which correspondingly alters the parameters relating to the position and or orientation of the entire seat (1) or at least of one component (12, 13, 14, 15).

12. Seat (1) according to any one of the preceding claims 7 to 11,
**characterized in that**
an operating level (6) is assigned to at least one spring and/or cushioning device (18) acting in the vertical and/or horizontal direction, wherein the associated functions (8) of the operating level correspond to the parameter settings of the spring and/or cushioning device (18), wherein the operating device (2) comprises a control unit (16) which receives a control signal from the multifunction operating element (4) and controls the at least one spring and/or cushioning device (18) , wherein one operating level (6) is associated with at least one seat comfort device (19), wherein the associated functions (8) of the operating level (6) correspond to the parameter settings of the seat comfort device (19) wherein the seat comfort device (19) is a seat air conditioning device and/or a seat shape adjustment device and/or a massage device, wherein the operating device (2) comprises a control unit (16) which receives a control signal from the multifunction control element (4) and controls the at least one seating comfort means (19).

13. Seat (1) according to any one of the preceding claims 7 to 12,
**characterized in that**
the multifunction operating element (4) is arranged on the seat cushion section (12) and/or on an armrest (15), wherein the multifunction operating element (4) is arranged on a lateral portion (12a, 15a) of the seat cushion section (12) and/or the armrest (15).

14. Seat (1) according to any one of the preceding claims 7 to 13,
**characterized in that**
both an operating level (6) is selectable and a specific function (8) is directly operable by means of at least one selection element (5).

## Revendications

1. Dispositif de commande (2) pour le réglage de paramètres de siège (3) d'un siège (1), en particulier d'un siège de véhicule,
**caractérisé par le fait que**
le dispositif de commande (2) comporte au moins un élément de commande multifonctions (4), lequel est déplaçable dans au moins cinq directions de commutation (7), chaque direction de commutation (7) étant attribuable à une fonction déterminée (8), laquelle modifie un paramètre de siège (3), l'élément de commande multifonctions (4) étant sous forme de tableau, le dispositif de commande (2) comportant au moins un élément de sélection (5), au moyen duquel au moins deux niveaux de commande (6) sont sélectionnables, les fonctions (8) attribuées aux directions de commutation (7) appartenant à un niveau de fonctionnement sélectionné, l'élément de sélection (5) étant disposé sur une surface de l'élément de commande multifonctions (4).

2. Dispositif de commande (2) selon la revendication 1,
**caractérisé par le fait que**
le dispositif de commande (2) comporte un unique élément de commande multifonctions (4) ou deux éléments de commande multifonctions (4) ou une pluralité d'éléments de commande multifonctions (4).

3. Dispositif de commande (2) selon l'une des revendications précédentes,
**caractérisé par le fait que**
l'élément de commande multifonctions (4) est déplaçable dans six directions de commutation (7), l'élément de commande multifonctions (4) présentant trois axes de déplacement (X, Y, Z), à chaque fois deux directions de commutation (7) opposées étant orientées le long d'un axe de déplacement (X, Y, Z), une première (7a) et une deuxième (7b) direction de commutation correspondant à un déplacement en translation de l'élément de commande multifonctions (4) le long du premier axe de déplacement (X), une troisième (7c) et une quatrième (7d) direction de commutation correspondant à un déplacement en translation de l'élément de commande multifonctions (4) le long d'un deuxième axe de déplacement (Y) ou à un mouvement de rotation de l'élément de commande multifonctions (4) autour du premier axe de déplacement (X), une cinquième (7e) et une sixième (7f) direction de commutation correspondant à un mouvement de rotation de l'élément de commande multifonctions (4) autour du troisième axe de déplacement (Z).

4. Dispositif de commande (2) selon l'une des revendications précédentes,
**caractérisé par le fait que**
l'élément de commande multifonctions (4) comporte une unité de rappel, de telle sorte que l'élément de commande multifonctions (4) est déplaçable pour venir dans sa position de départ après une déviation le long d'une direction de commutation (7) déterminée après un temps prédéterminé au moyen de l'unité de rappel.

5. Dispositif de commande (2) selon l'une des revendications précédentes,
**caractérisé par le fait que**
l'élément de commande multifonctions (4) est équipé d'éléments haptiques (9) et/ou d'un revêtement de préhension (20), l'élément de commande multifonctions (4) étant pourvu d'au moins un élément d'identification (10), au moyen duquel les directions de commutation (7) sont identifiables et/ou un éclairage est prévu sur l'élément de commande multifonctions (4).

6. Dispositif de commande (2) selon l'une des revendications précédentes,
**caractérisé par le fait qu'**
un dispositif d'affichage (11) est disposé sur l'élément de commande multifonctions (4).

7. Siège (1), en particulier siège de véhicule, comportant un dispositif de commande (2) pour le réglage de paramètres de siège (3) selon l'une des revendications 1 à 6.

8. Siège (1) selon la revendication 7,
**caractérisé par le fait que**
le siège (1) comporte les composants partie coussin de siège (12), dossier (13), appui-tête (14) et au moins un accoudoir (15), un niveau de commande (6) étant attribué à tout le siège (1) ou à au moins un composant (12, 13, 14, 15), le paramètre de siège (3) modifié par la fonction déterminée correspondant à une modification de la position de la hauteur de tout le siège (1) ou d'au moins un composant (12, 13, 14, 15) et/ou de la hauteur de tout le siège (1) ou d'au moins un composant (12, 13, 14, 15) et/ou de l'orientation de tout le siège (1) ou d'au moins un composant (12, 13, 14, 15).

9. Siège (1) selon la revendication 8,
**caractérisé par le fait qu'**
une direction de commutation déterminée (7) est attribuée à une fonction (8) d'un premier niveau de commande (6) d'une modification d'un paramètre de siège (3) d'un premier élément (1, 12, 13, 14, 15), lequel peut être tout le siège (1) ou un composant (12, 13, 14, 15), par rapport à une direction de siège déterminée (X1, Y1, Z1) et la même direction de commutation (7) est attribuée à une fonction (8) d'au moins un autre niveau de commande (6) d'une modification d'un paramètre de siège (3) d'un second élément (1, 12, 13, 14, 15), lequel peut être tout le siège (1) ou un composant (12, 13, 14, 15), par rapport à une même direction de siège (X1, Y1, Z1).

10. Siège (1) selon l'une des revendications 8 et 9,
**caractérisé par le fait qu'**
un déplacement de l'élément de commande multifonctions (4) dans une direction de commutation (7) par rapport à l'un des axes de déplacement (X, Y, Z) provoque une modification similaire de la position et/ou de l'orientation de tout le siège (1) ou d'au moins un composant (12, 13, 14, 15B) par rapport à une direction de siège (X1, Y1, Z1) parallèle aux axes de déplacement (X, Y, Z).

11. Siège (1) selon l'une des revendications 7 à 10,
**caractérisé par le fait que**
le dispositif de commande (6) comporte une unité de commande (16), laquelle reçoit un signal de commande de l'élément de commande multifonctions (4) et commande au moins un actionneur (17), lequel modifie de façon correspondante les paramètres par rapport à la position et/ou l'orientation de tout le siège (1) ou d'au moins un composant (12, 13, 14, 15).

12. Siège (1) selon l'une des revendications 7 à 11,
**caractérisé par le fait qu'**
un niveau de commande (6) est attribué à au moins un dispositif à ressort et/ou d'amortissement (18), lequel agit dans la direction verticale et/ou horizontale, les fonctions associées (8) du niveau de commande correspondant aux réglages de paramètres du dispositif à ressort et/ou d'amortissement (18), le dispositif de commande (2) comportant une unité de commande (16), laquelle reçoit un signal de commande de l'élément de commande multifonctions (4) et commande ledit au moins un dispositif à ressort et/ou d'amortissement (18), un niveau de commande (6) étant attribué à au moins un dispositif de confort de siège (19), les fonctions associées (8) du niveau de commande (6) correspondant aux réglages de paramètres du dispositif de confort de siège (19), le dispositif de confort de siège (19) étant un dispositif de climatisation de siège et/ou un dispositif de réglage de contour de siège et/ou un dispositif de massage, le dispositif de commande (2) comportant une unité de commande (16), laquelle reçoit un signal de commande de l'élément de commande multifonctions (4) et commande ledit au moins un dispositif de confort de siège (19).

13. Siège (1) selon l'une des revendications 7 à 12,
**caractérisé par le fait que**
l'élément de commande multifonctions (4) est disposé sur la partie coussin de siège (12) et/ou sur un accoudoir (15), l'élément de commande multifonctions (4) étant disposé sur une section latérale (12a, 15a) de la partie coussin de siège (12) et/ou de l'accoudoir (15).

14. Siège (1) selon l'une des revendications 7 à 13,
**caractérisé par le fait qu'**
au moyen dudit au moins un élément de sélection (5), non seulement un niveau de commande (6) est sélectionnable mais encore une fonction déterminée (8) est apte à être commandée directement.
